(19) Europäisches Patentamt
European Patent Office
Office européen des brevets

(11) Numéro de publication: **0 267 107 B1**

(12) # FASCICULE DE BREVET EUROPEEN

(45) Date de publication de fascicule du brevet: **23.12.92**

(51) Int. Cl.5: **H01M 6/16**, H01M 6/18, H01B 1/12

(21) Numéro de dépôt: **87402442.5**

(22) Date de dépôt: **29.10.87**

Le dossier contient des informations techniques présentées postérieurement au dépôt de la demande et ne figurant pas dans le présent fascicule.

(54) **Nouveau matériau à conduction ionique.**

(30) Priorité: **30.10.86 FR 8615115**

(43) Date de publication de la demande:
**11.05.88 Bulletin 88/19**

(45) Mention de la délivrance du brevet:
**23.12.92 Bulletin 92/52**

(84) Etats contractants désignés:
**AT BE CH DE ES FR GB IT LI LU NL SE**

(56) Documents cités:
**EP-A- 0 042 210**
**WO-A-85/02718**
**FR-A- 2 593 321**
**US-A- 3 998 763**

**JOURNAL OF MOLECULAR STRUCTURE, vol. 29, no. 1, 1975, pages 97-103; P.R. JOHNSON et al.: "Electronic spectra of copper(II) beta-ketoenolates: Intraligand and charge transfer transitions"**

(73) Titulaire: **CENTRE NATIONAL DE LA RECHERCHE SCIENTIFIOUE (CNRS)**
**13 Ouai Anatole France**
**F-75700 Paris(FR)**

Titulaire: **HYDRO-OUEBEC**
**75, West Dorchester Boulevard**
**Montreal, Ouébec H2Z 1A4(CA)**

Titulaire: **SOCIETE NATIONALE ELF AOUITAINE**
**Tour Elf, 2, Place de la Coupole, La Défense 6**
**F-92400 Courbevoie(FR)**

(72) Inventeur: **Armand, Michel**
**Les Corjons Le Bouloud**
**F-38410 St Martin D'Uriage(FR)**

(74) Mandataire: **Boillot, Marc**
**SOCIETE NATIONALE ELF AOUITAINE Division Propriété Industrielle Tour Elf**
**F-92078 Paris la Défense Cédex 45(FR)**

**EP 0 267 107 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un nouveau matériau à conduction ionique utilisable notamment comme électrolyte liquide ou solide en vue de la réalisation de générateurs électrochimiques.

Ce nouveau matériau est constitué par un sel en solution dans un solvant liquide ou solide, ce sel étant représenté par l'une des formules suivantes :

(I) 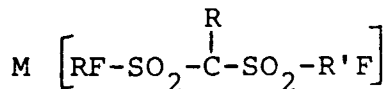

(II) 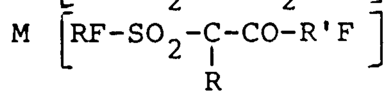

(III) 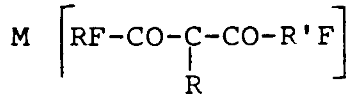

(IV) 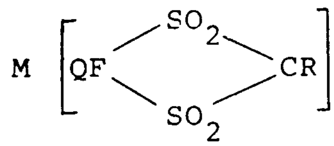

(V) 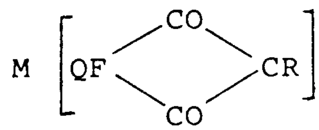

formules dans lesquelles

- M est un métal alcalin, alcalino-terreux, un métal de transition ou une terre rare,
- RF et R'F qui sont identiques ou différents représentent chacun un radical perhalogéné, de préférence perfluoré, ayant de 1 à 12 atomes de carbone,
- R est un hydrogène ou un radical alkyle ayant de 1 à 30 atomes de carbone,
- QF est un radical divalent perfluoré ayant de 2 à 6 atomes de carbone.

Ce sel peut être mis en solution dans un matériau macromoléculaire du type de ceux décrits dans le brevet européen 013199, en particulier, dans un homo ou un copolymère d'oxyde d'éthylène ou encore dans un matériau du type polyphosphazène.

Selon une autre caractéristique de l'invention, ce sel peut être mis en solution dans un solvant liquide aprotique polaire, choisi parmi :

- les éthers linéaires tels que le diéthyléther, le diméthoxyéthane ou les éthers cycliques tels que le tétrahydrofurane, le dioxanne, le diméthyltétrahydrofurane,
- les esthers tels que le formiate de méthyle ou d'éthyle, le carbonate de propylène ou d'éthylène, les butyrolactones,
- les nitriles, acétonitriles, benzonitriles,
- les dérivés nitrés tels que le nitrométhane ou le nitrobenzène,
- les amides tels que le diméthylformamide, le diéthylformamide et la N-méthylpyrolidone,
- les sulfones tels que la diméthylsulfone, le tétraméthylène sulfone et autres sulfolanes.

En effet, ces sels possèdent, d'une manière surprenante une grande solubilité dans ces différents types de solvants.

Pour la réalisation de générateurs électrochimiques solides dans lesquels le solvant est un matériau macromoléculaire du type de ceux décrits dans le brevet européen 013199, le rapport entre le nombre d'atomes du métal M et le nombre d'oxygènes ou d'hétéroatome du polymère est choisi dans une gamme de valeurs s'étendant entre 1 et 40.

De préférence, ce rapport se situe autour de 30.

Selon une autre caractéristique de l'invention, le matériau à conduction ionique comporte un sel selon l'une des formules (I) à (IV), mais il peut aussi comporter un deuxième, voire même plusieurs autres sels, l'important étant que tous ces sels aient le même cation.

Parmi ces sels, on choisira de préférence un des sels décrits dans le brevet européen 013199, mais encore on pourra choisir un sel décrit dans le brevet français n° 2.527.602 ou dans le brevet français n° 2.527.610.

Mais encore de préférence, on choisira un sel perhalogèné du type de ceux décrits et revendiqués dans le brevet US n° 4.505.997 et connu sous le nom de TFSI.

A titre de solvant liquide et parmi les sulfones, on choisira avantageusement un dérivé sulfoné du type représenté par la formule (V) :

(V) 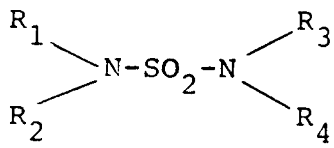

dans laquelle $R_1$, $R_2$, $R_3$ et $R_4$ sont identiques ou différents et représentent chacun un radical alkyle ou oxa-alkyle ayant de 1 à 10 atomes de carbone.

De préférence, on choisira des radicaux éthyles pour $R_1$, $R_2$, $R_3$ et $R_4$.

Le matériau à conduction ionique selon l'invention sera avantageusement utilisé en tant qu'électrolyte solide pour la réalisation d'accumulateurs électrochimiques de courant tant primaires que secondaires, mais il sera aussi utilisé pour la réalisation d'électrodes composites telles que décrites dans le brevet européen n° 013199, cette électrode pouvant alors être associée à un électrolyte comportant le même matériau macromoléculaire ou un matériau différent.

De façon à illustrer l'invention, on va décrire ci-dessous, à titre non limitatif, deux exemples de générateurs réalisés avec le nouveau matériau.

<u>EXEMPLE 1</u> :

On réalisait un premier générateur en associant, par pressage, les trois éléments en film mince suivants :

- une électrode positive composite,
- un électrolyte solide,
- une électrode négative à base de lithium.

L'électrolyte solide consistait en un matériau à conduction ionique constitué par une solution dans un copolymère d'oxyde d'éthylène et de méthylglycidyléther de haut poids moléculaire, d'un sel appelé TFSM et représenté par la formule (I) dans laquelle :

RF = R'F = $CF_3$ , M = Li

R = H

la solution étant faite à raison de 30 atomes d'oxygène provenant du copolymère pour un atome de lithium.

La conductivité ionique de ce matériau est égale à environ $10^{-5}$ $ohm^{-1}$ $cm^{-1}$ à température ambiante.

L'électrode positive composite était réalisée en incorporant audit matériau à conduction ionique, à titre de matière active, une poudre de $TiS_2$ et du noir de carbone à raison de 20 % en poids de matériau à conduction ionique par rapport au poids total de l'électrode et en mettant le produit ainsi obtenu sous la forme d'une couche mince.

L'électrode positive composite avait une épaisseur de 65 microns.

Le générateur formé par l'association des trois élements précités, constituait un accumulateur rechargeable selon un nombre de cycles supérieur à 200 à température ambiante.

<u>EXEMPLE 2</u> :

On réalisait un second générateur similaire au générateur de l'exemple 1 en changeant toutefois la composition et l'épaisseur de l'électrode positive composite.

L'électrode positive était obtenue en incorporant au matériau à conduction ionique de l'exemple 1, une poudre de $V_6O_{13}$ et du noir de carbone de façon à obtenir 50 % en poids de matériau à conduction ionique par rapport au poids total de l'électrode et en mettant le produit ainsi obtenu sous la forme d'une couche mince.

L'électrode positive composite avait une épaisseur de 15 microns.

Le générateur formé par l'association des trois éléments, à savoir électrode positive, électrolyte solide et électrode négative, conservait encore, après 200 cycles de charge et décharge à température ambiante, plus de 60 % de l'énergie disponible après le dixième cycle de charge et décharge.

Bien entendu, l'invention n'est pas limitée aux modes de réalisation décrits. Elle en englobe au contraire

toutes les variantes.

**Revendications**

1. Matériau à conduction ionique constitué d'une solution d'un sel dans un solvant choisi parmi (i) les matériaux macromoléculaires conduisant à une solution ayant un caractère d'électrolyte et (ii) les liquides aprotiques polaires, caractérisé en ce que ledit sel est représenté par l'une des formules suivantes :

(I) 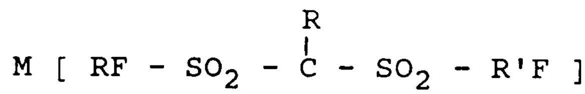

(II) 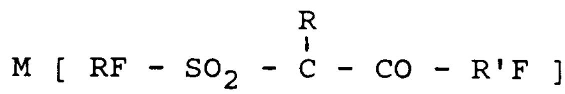

(III) 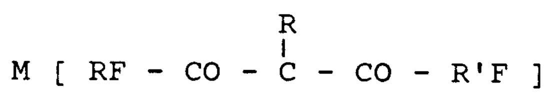

(IV) 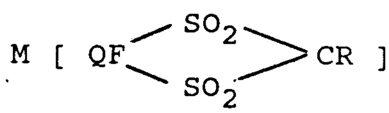

(IV) 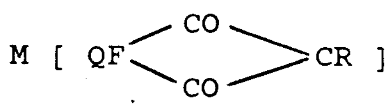

dans lesquelles :
M désigne un métal alcalin, alcalinoterreux, un métal de transition ou une terre rare ;
RF et R'F, identiques ou différents, représentent chacun un radical perhalogéné en $C_1$ à $C_{12}$ ;
QF est un radical divalent perfluoré en $C_2$ à $C_6$ ; et
R est un atome d'hydrogène ou un radical alkyle en $C_1$ à $C_{30}$.

2. Matériau selon la revendication 1, caractérisé en ce que dans la formule du sel, chacun des radicaux RF et R'F est perfluoré.

3. Matériau selon la revendication 1 ou 2, caractérisé en ce que le solvant est un liquide aprotique polaire choisi parmi les éthers linéaires ou cycliques, les esters, les nitriles, les amides et les sulfones.

4. Matériau selon la revendication 3, caractérisé en ce que le liquide aprotique polaire est choisi parmi les composés diéthyléther, diméthoxyéthane, tétrahydrofuranne, dioxanne, diméthyltétrahydrofuranne, formiate de méthyle, formiate d'éthyle, carbonate de propylène, carbonate d'éthylène, butyrolactones, acétonitrile, benzonitriles, nitrométhane, nitrobenzène, diméthylformamide, diéthylformamide, N-méthylpyrrolidone, diméthylsulfone, tétraméthylène sulfone.

5. Matériau selon la revendication 3, caractérisé en ce que le solvant est une sulfone représentée par la formule

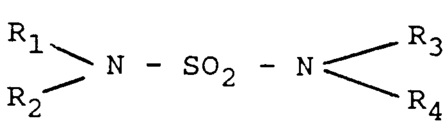

dans laquelle $R_1$, $R_2$, $R_3$ et $R_4$ désignent des radicaux alkyles ou oxa-alkyles en $C_1$ à $C_{10}$.

6. Matériau selon la revendication 1 ou 2 caractérisé en ce que le solvant est un matériau macromoléculaire consistant en un homopolymère ou en un copolymère d'oxyde d'éthylène.

7. Matériau selon la revendication 1 ou 2, caractérisé en ce que le solvant est un matériau macromoléculaire consistant en un polyphosphazène.

## Claims

1. Ionically-conductive substance constituted by a solution of a salt in a solvent selected from (i) macromolecular substances which give rise to solutions of an electrolytic nature and (ii) polar aprotic liquids, characterised in that the salt is represented by one of the following formulae:

(I) 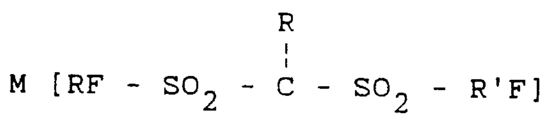

(II) 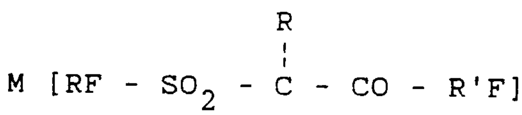

(III) 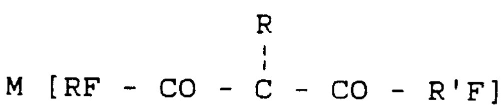

(IV) 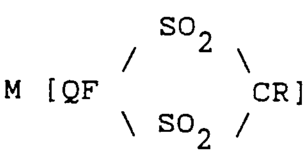

(V) 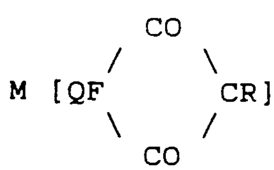

in which:
M indicates an alkali metal, an alkaline-earth metal, a transition metal or a rare earth,
RF and R'F are the same or different and each represents a perhalogenated $C_1$ to $C_{12}$ radical,
QF is a perfluorinated divalent $C_2$ to $C_6$ radical, and
R is a hydrogen atom or a $C_1$ to $C_{30}$ alkyl radical.

2. Substance according to Claim 1, characterised in that each of the RF and R'F radicals in the formula of the salt is perfluorinated.

3. Substance according to Claim 1 or Claim 2, characterised in that the solvent is a polar aprotic liquid selected from linear and cyclic ethers, esters, nitriles, amides and sulphones.

4. Substance according to Claim 3, characterised in that the polar aprotic liquid is selected from the compounds: diethyl ether, dimethoxyethane, tetrahydrofuran, dioxan, dimethyl tetrahydrofuran, methyl formate, ethyl formate, propylene carbonate, ethylene carbonate, butyrolactones, acetonitrile, bensonitriles, nitromethane, nitrobenzene, dimethylformamide, diethylformamide, N-methyl pyrrolidone, dimethyl sulphone, and tetramethylene sulphone.

5. Substance according to Claim 3, characterised in that the solvent is a sulphone represented by the

formula

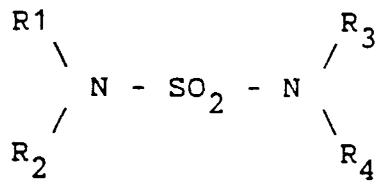

in which $R_1$, $R_2$, $R_3$ and $R_4$ indicate $C_1$ to $C_{10}$ alkyl or oxaalkyl radicals.

6. Substance according to Claim 1 or Claim 2, characterised in that the solvent is a macromolecular substance consisting of a homopolymer or a copolymer of ethylene oxide.

7. Substance according to Claim 1 or Claim 2, characterised in that the solvent is a macromolecular substance consisting of a polyphosphazene.

## Patentansprüche

1. Material mit Ionenleitung, bestehend aus einer Salzlösung in einem Lösungsmittel, ausgewählt unter (i) makromolekularen Stoffen, die zu einer Lösung von Elektrolytcharakter führen, und (ii) polaren aprotischen Flüssigkeiten, dadurch **gekennzeichnet,** daß das Salz eine der nachfolgenden Formeln aufweist:

(I) 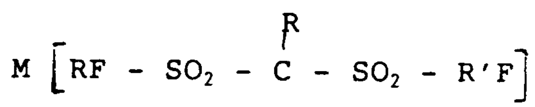

(II) 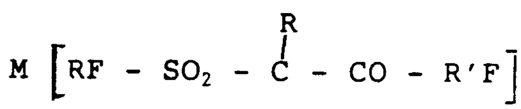

(III) 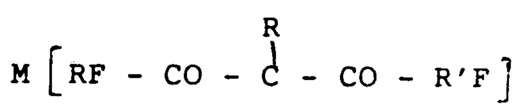

(IV) 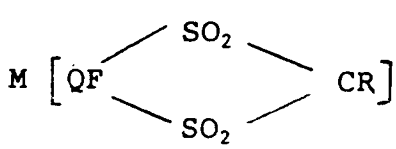

( V) 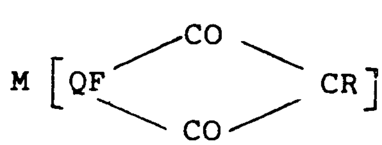

worin M ein Alkali-, Erdalkali-, Übergangs- oder Seltenerdmetall bedeutet, RF und R'F gleich oder verschieden sind und jeweils einen perhalogenierten $C_1$-$C_{12}$-Rest, QF einen zweiwertigen perfluorierten $C_2$-$C_6$-Rest und R ein Wasserstoffatom oder einen $C_1$-$C_{30}$-Alkylrest bedeuten.

2. Material nach Anspruch 1, dadurch **gekennzeichnet,** daß in der Formel des Salzes jeder der Reste RF und R'F perfluoriert ist.

3. Material nach Anspruch 1 oder 2, dadurch **gekennzeichnet,** daß das Lösungsmittel eine polare aprotische Flüssigkeit ist, ausgewählt unter unverzweigten oder cyclischen Ethern, Estern, Nitrilen, Amiden und Sulfonen.

4. Material nach Anspruch 3, dadurch **gekennzeichnet,** daß die polare aprotische Flüssigkeit ausgewählt ist unter Diethylether, Dimethoxyethan, Tetrahydrofuran, Dioxan, Dimethyltetrahydrofuran, Methyl-, Ethylformiat, Propylen, Ethylencarbonat, Butyrolactonen, Acetonitril, Benzonitrilen, Nitromethan, Nitrobenzol, Dimethylformamid, Diethylformamid, N-Methylpyrrolidon, Dimethylsulfon, Tetramethylensulfon.

5. Material nach Anspruch 3, dadurch **gekennzeichnet,** daß das Lösungsmittel ein Sulfon der Formel

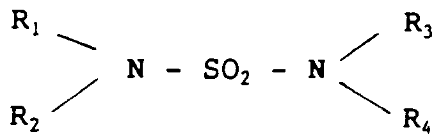

ist, worin $R_1$, $R_2$, $R_3$ und $R_4$ $C_1$-$C_{10}$-Alkyl- oder -Oxaalkylreste bedeuten.

6. Material nach Anspruch 1 oder 2, dadurch **gekennzeichnet,** daß das Lösungsmittel ein makromolekulares Material ist, bestehend aus einem Ethylenoxidhomopolymer oder -copolymer.

7. Material nach Anspruch 1 oder 2, dadurch **gekennzeichnet,** daß das Lösungsmittel ein aus einem Polyphosphazen bestehendes makromolekulares Material darstellt.